# EUROPEAN PATENT APPLICATION

(11) **EP 4 580 246 A1**
(43) Date of publication of application: **02.07.2025**
(21) Application number: 23875243.0
(22) Date of filing: 05.10.2023
(51) Int. Cl.: H04W 24/10, H04W 76/25, H04W 76/27, H04W 8/24, H04W 48/08, H04W 48/18

(54) **METHOD AND DEVICE FOR PERFORMING EARLY MEASUREMENT IN MOBILE COMMUNICATION SYSTEM**

(30) Priority: 06.10.2022 KR 20220128119
(71) Applicant: Samsung Electronics Co., Ltd., Suwon-si, Gyeonggi-do 16677 (KR)
(72) Inventor: JUNG, Sangyeob, Suwon-si Gyeonggi-do 16677 (KR); KIM, Sangbum, Suwon-si Gyeonggi-do 16677 (KR)
(74) Representative: Gulde & Partner
(86) International application number: PCT/KR2023/015358
(87) International publication number: WO 2024/076181

(57) **Abstract**

The present disclosure relates to a 5G or 6G communication system for supporting higher data transmission rates. In addition, a method performed by a user equipment in a wireless communication system according to various embodiments of the present disclosure may comprise the operations of: receiving a radio resource control (RRC) message including measurement configuration information from a base station; transmitting, to the base station, a first message including user equipment capability information on the basis of the RRC message; receiving, from the base station, an RRC connection release message including idle mode measurement configuration information; identifying whether idle mode measurement interval information is included in the idle mode measurement configuration information on the basis of the RRC connection release message; and when the RRC connection release message does not include the idle mode measurement interval information, deleting the stored measurement information.

## Description

### [Technical Field]

The disclosure relates to a method and device for performing early measurement in a mobile communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a method and device for performing early measurement in a wireless communication system.

### [Solution to Problem]

A method performed by a user equipment in a wireless communication system according to an embodiment of the disclosure may include receiving a radio resource control (RRC) message including measurement configuration information from a base station, transmitting, to the base station, a first message including user equipment capability information based on the RRC message, receiving an RRC connection release message including idle mode measurement configuration information from the base station, identifying, based on the RRC connection release message, whether idle mode measurement interval information is included in the idle mode measurement configuration information, and when the RRC connection release message does not include the idle mode measurement interval information, discarding stored measurement information.

### [Advantageous Effects]

According to an embodiment of the disclosure, services can be provided effectively.

### [Description of Drawings]

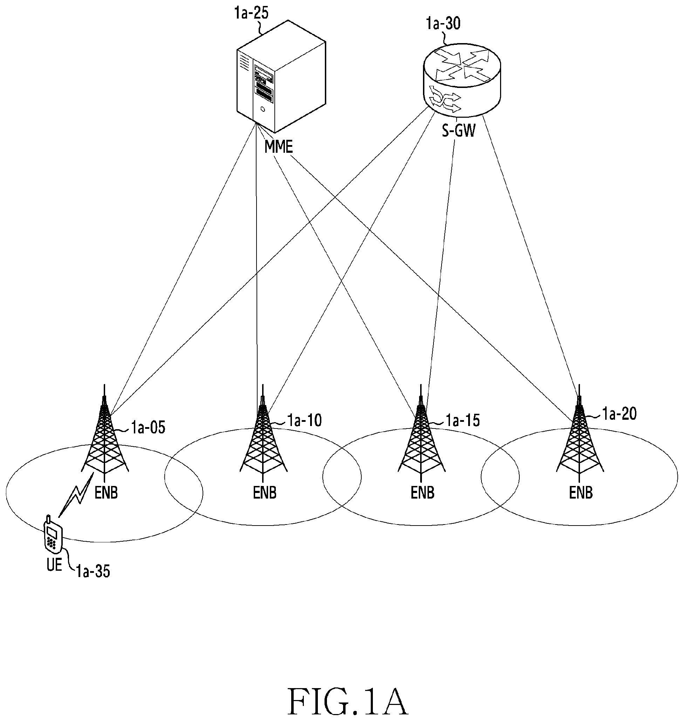

FIG. 1A illustrates a structure of a long term evolution (LTE) system according to an embodiment of the disclosure.

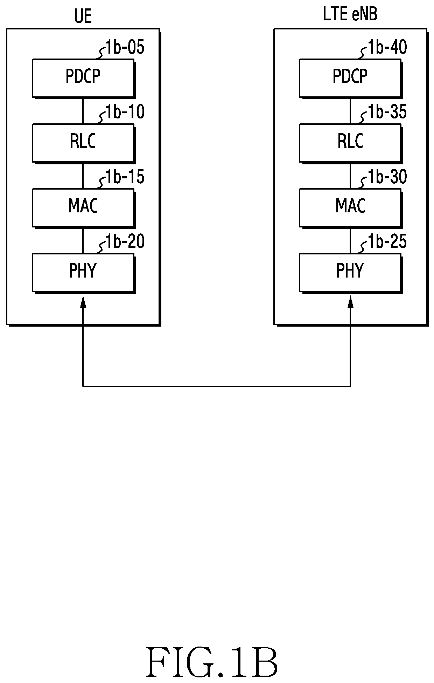

FIG. 1B illustrates a radio protocol structure in an LTE system according to an embodiment of the disclosure.

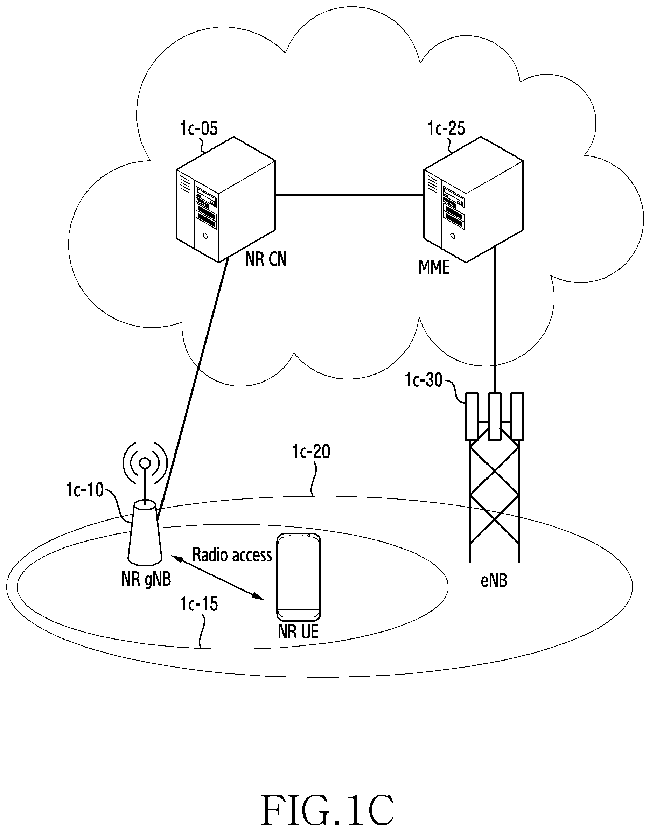

FIG. 1C illustrates a structure of a next-generation mobile communication system according to an embodiment of the disclosure.

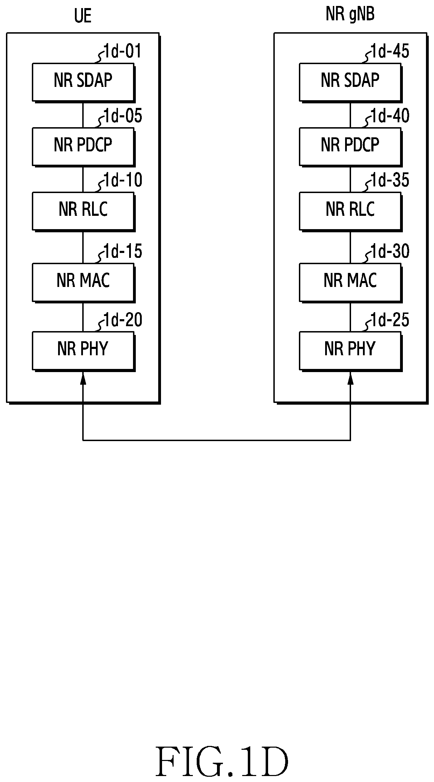

FIG. 1D illustrates a radio protocol structure of a next-generation mobile communication system according to an embodiment of the disclosure.

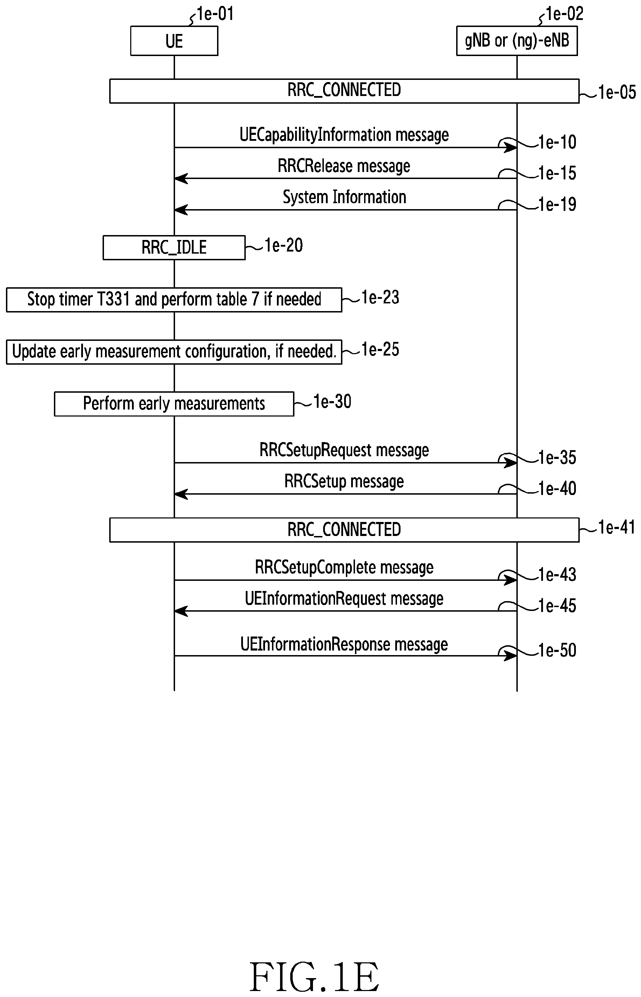

FIG. 1E is a flowchart illustrating a procedure of reporting an early measurement result value to a base station by a UE in the disclosure.

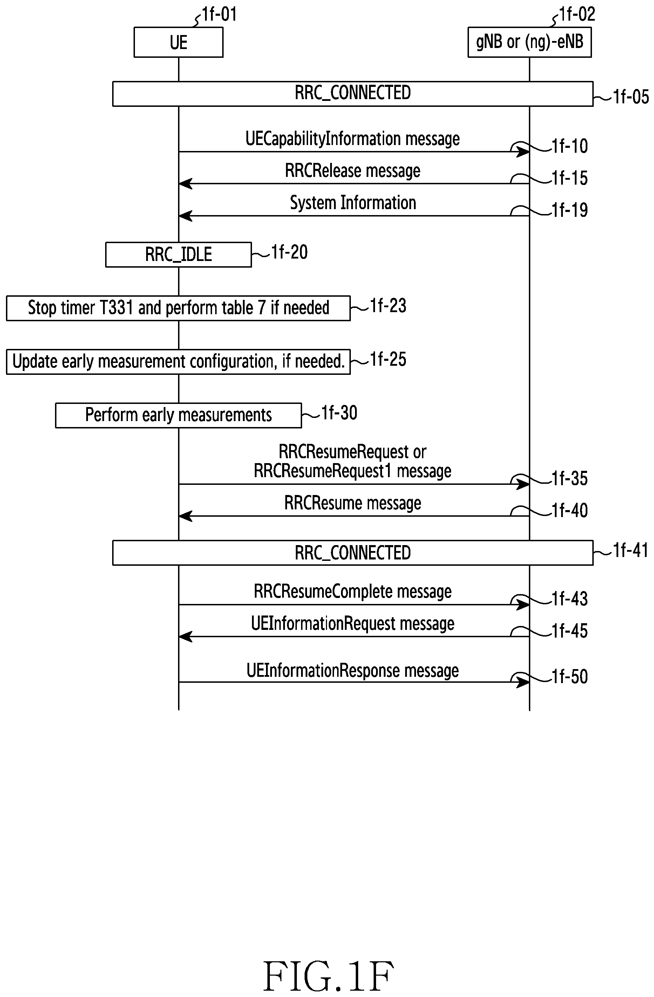

FIG. 1F is a flowchart illustrating a procedure of reporting an early measurement result value to a base station by a UE in the disclosure.

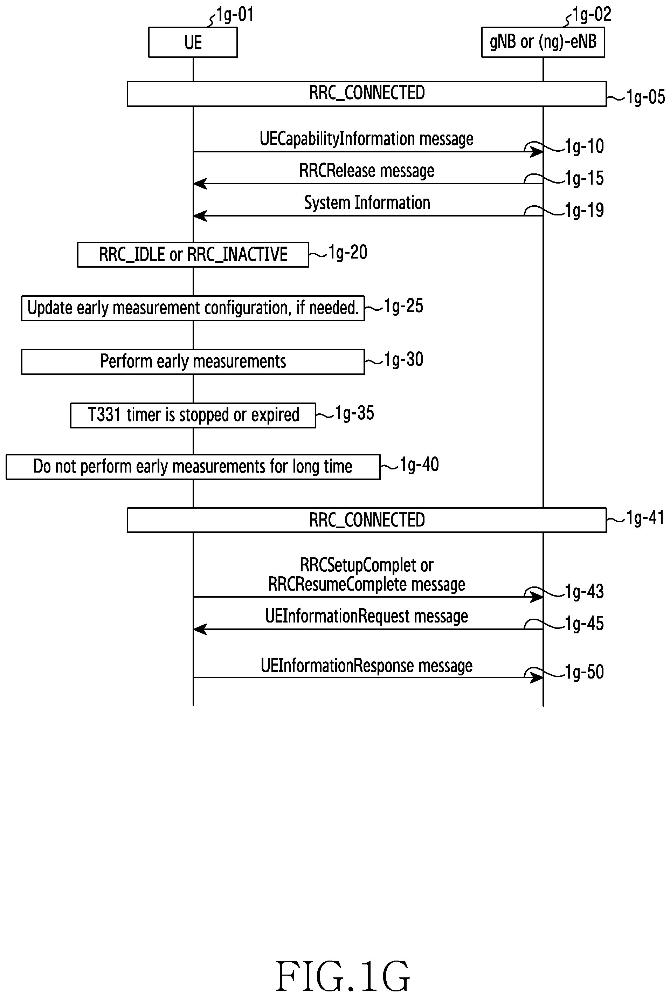

FIG. 1G is a flowchart illustrating a procedure of reporting an outdated early measurement result value to a base station by a UE in the disclosure.

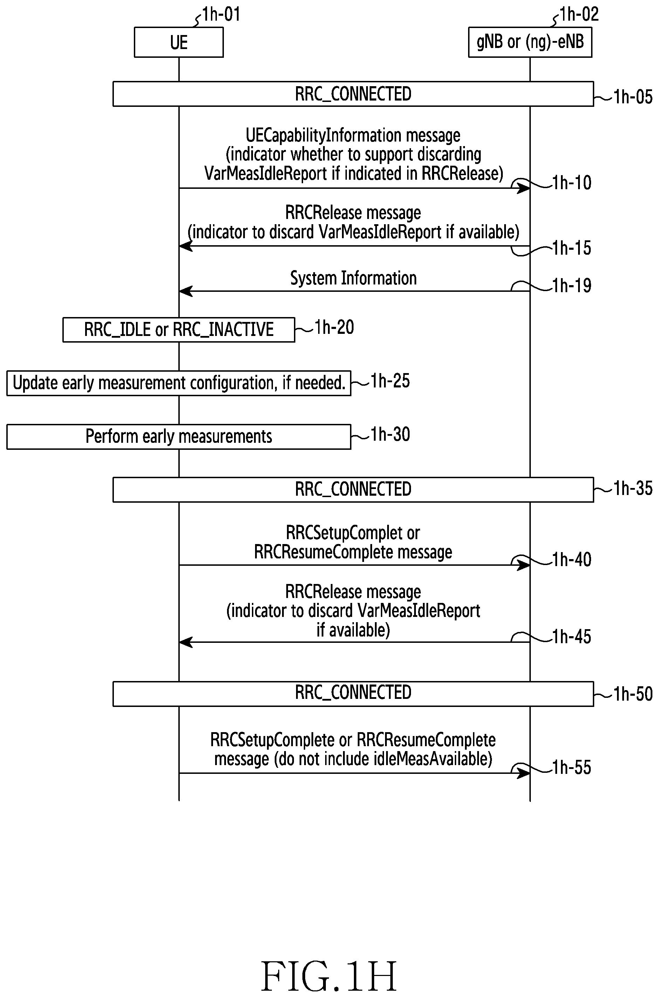

FIG. 1H is a flowchart for a method of releasing an early measurement result value by a UE in the disclosure.

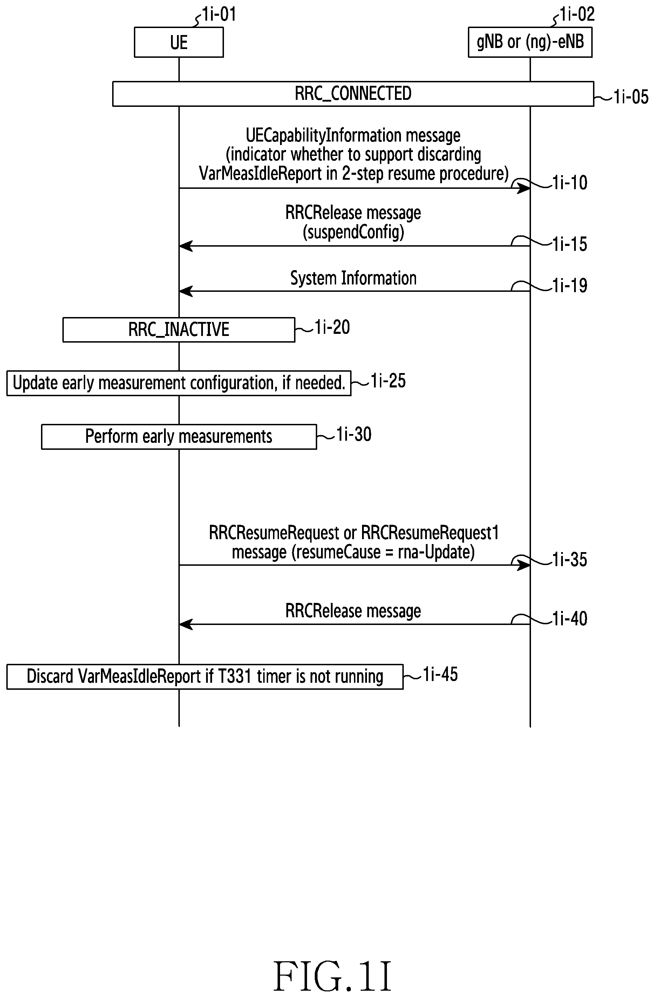

FIG. 1I is a flowchart for a method of releasing an early measurement result value by a UE in the disclosure.

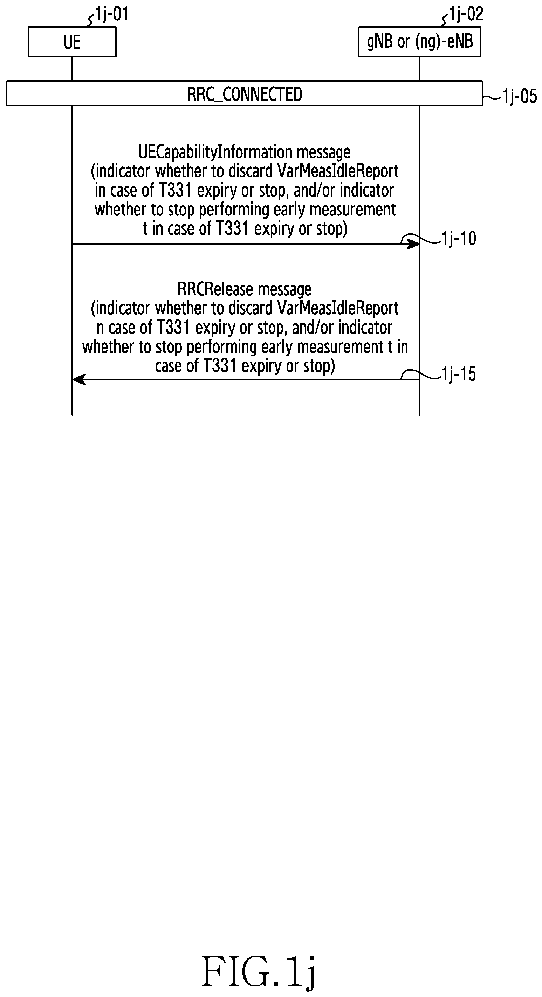

FIG. 1J is a flowchart for a method of releasing an early measurement result value by a UE in the disclosure.

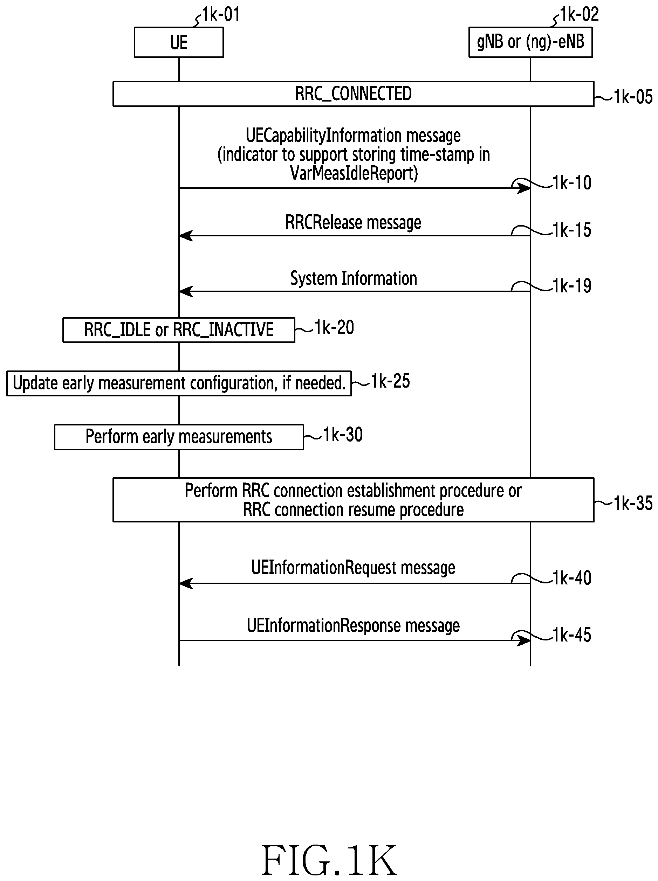

FIG. 1K is a flowchart in which, when a UE stores an early measurement result value, a time stamp is also stored, in the disclosure.

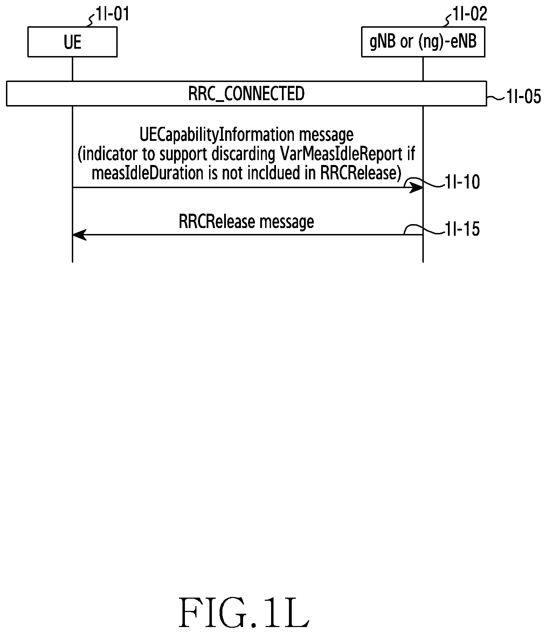

FIG. 1L is a flowchart for a method of releasing an early measurement result value by a UE in the disclosure.

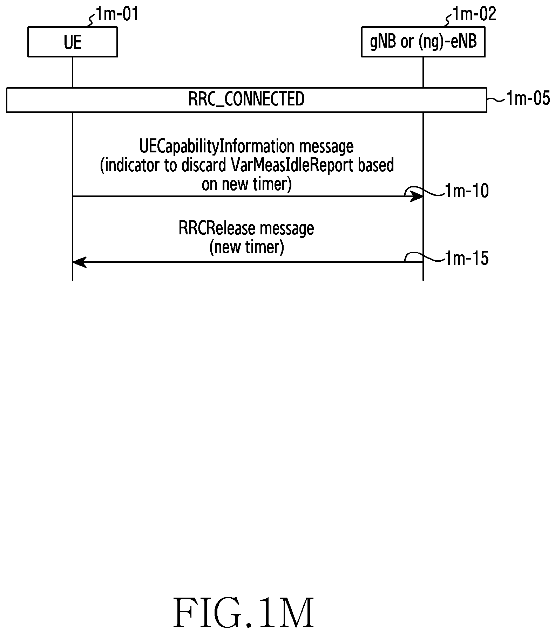

FIG. 1M is a flowchart for a method of releasing an early measurement result value by a UE in the disclosure.

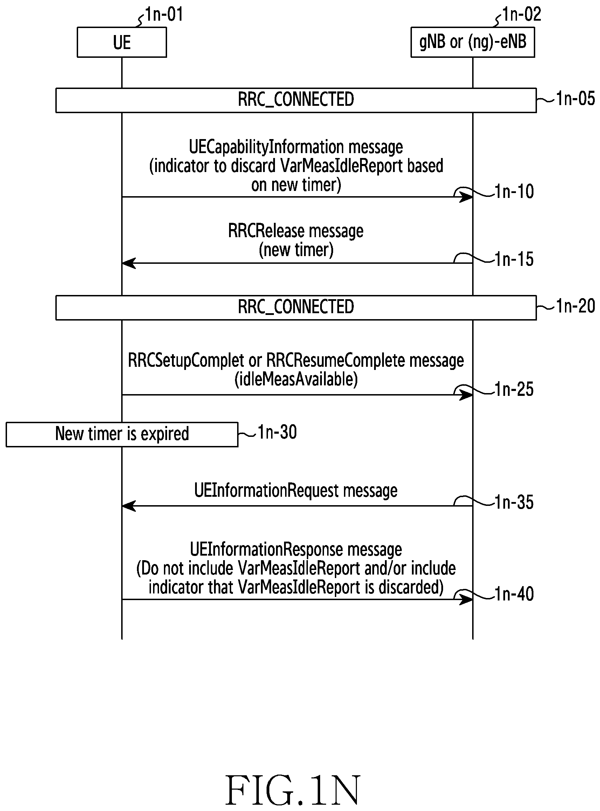

FIG. 1N is a flowchart for a method of releasing an early measurement result value by a UE in the disclosure.

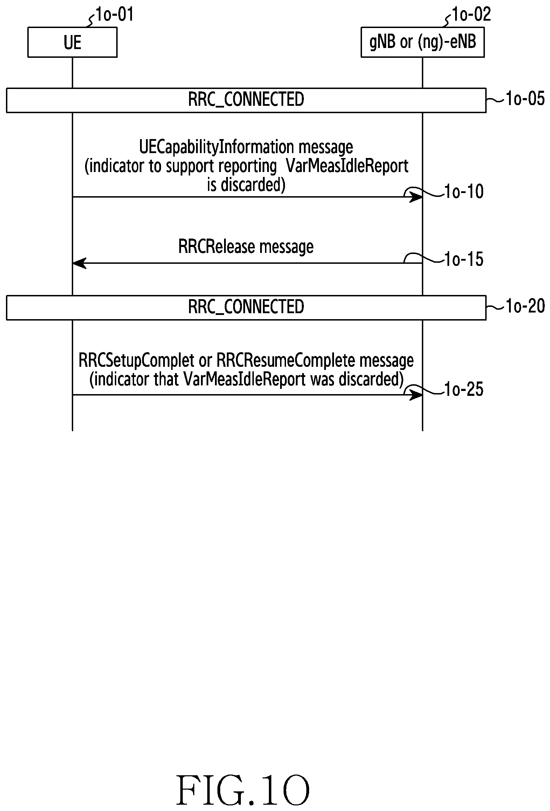

FIG. 1O is a flowchart in which a UE transmits, to a base station, and indicator indicating that an early measurement result value has been released, in the disclosure.

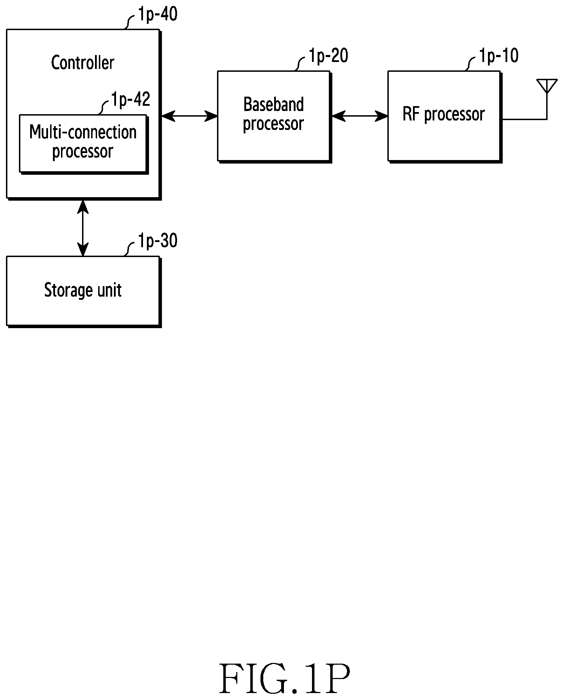

FIG. 1P is a block diagram illustrating an internal structure of a UE according to an embodiment of the disclosure.

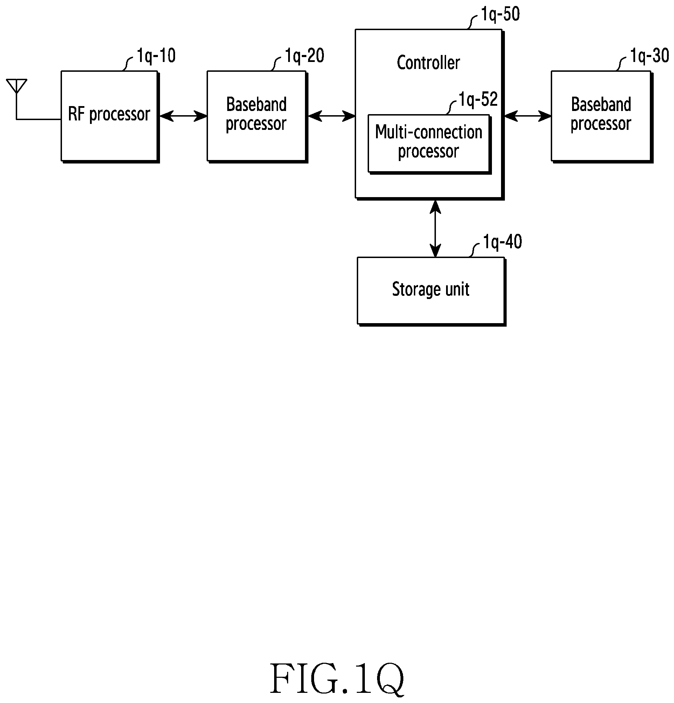

FIG. 1Q is a block diagram illustrating a structure of an NR base station according to an embodiment of the disclosure.

### [Mode for the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, a detailed description of known functions or configurations that may make the subject matter of the disclosure unnecessarily unclear will be omitted.

In describing the embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards.

In the following description, a base station (BS) is an entity that allocates resources to terminals, and may be at least one of a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB". A terminal may include a user equipment (UE), a mobile station (MS), a cellular phone, a smartphone, a computer, or a multimedia system capable of performing a communication function. Of course, the examples given above are not limiting.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the terminal. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also requires a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

FIG. 1A illustrates a structure of an LTE system according to an embodiment of the disclosure.

Referring to FIG. 1A, as illustrated therein, a radio access network of an LTE system includes a plurality of base stations (evolved node Bs, hereinafter ENBs, node Bs, or BSs) 1a-05, 1a-10, 1a-15, and 1a-20, a mobility management entity (MME) 1a-25, and a serving gateway (S-GW) 1a-30. A user equipment (hereinafter UE or terminal) 1a-35 accesses an external network through the ENBs 1a-05, 1a-10, 1a-15, and 1a-20 and the S-GW 1a-30.

The base stations (evolve node Bs, hereinafter eNBs, node Bs, or BSs) 1a-05, 1a-10, 1a-15, and 1a-20 are access nodes in a cellular network, and provides radio access to UEs connected to the network. That is, in order to service users' traffic, the base stations 1a-05, 1a-10, 1a-15, and 1a-20 collect state information such as the UEs' buffer states, available transmission power states, and channel states and schedule the same, thereby supporting connection between the UEs and the core network (CN).

In addition, the base stations 1a-05, 1a-10, 1a-15, and 1a-20 may each correspond to a conventional node B in a universal mobile telecommunications system (UMTS). The ENBs 1a-05, 1a-10, 1a-15, and 1a-20 may be connected to the UE 1a-35 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 1a-05, 1a-10, 1a-15, and 1a-20 serve as the device. In general, one ENB may control multiple cells. In order to implement a transfer rate of 100 Mbps, the LTE system uses orthogonal frequency division multiplexing (hereinafter referred to as OFDM) as a radio access technology in a bandwidth of, for example, 20 MHz. Furthermore, the LTE system employs an adaptive modulation & coding (hereinafter referred to as AMC) scheme for determining a modulation scheme and a channel coding rate according to a channel state of a UE.

The S-GW 1a-30 is a device that provides a data bearer, and generates or removes a data bearer under the control of the MME 1a-25. The MME 1a-25 is a device responsible for various control functions as well as a mobility management function for a UE, and is connected to multiple base stations.

FIG. 1B illustrates a radio protocol structure in an LTE system according to an embodiment of the disclosure.

Referring to FIG. 1B, a radio protocol of an LTE system includes a packet data convergence protocol (PDCP) 1b-05 or 1b-40, a radio link control (RLC) 1b-10 or 1b-35, and a medium access control (MAC) 1b-15 or 1b-30 on each of UE and eNB sides. The packet data convergence protocol (PDCP) 1b-05 or 1b-40 is responsible for operations such as IP header compression/reconstruction. The main functions of the PDCP are summarized as follows.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter referred to as RLC) 1b-10 or 1b-35 reconfigures a PDCP protocol data unit (PDU) into an appropriate size to perform an ARQ operation. The main functions of the RLC are summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 1b-15 or 1b-30 is connected to several RLC layer devices configured in a single terminal, and performs operations of multiplexing RLC PDUs to a MAC PDU and demultiplexing a MAC PDU to RLC PDUs. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 1b-20 or 1b-25 performs operations of channel-coding and modulating upper layer data, thereby obtaining OFDM symbols, and delivering the same through a radio channel, or demodulating OFDM symbols received through the radio channel, channel-decoding the same, and delivering the same to the upper layer.

Although not illustrated in FIG. 1B, radio resource control (hereinafter RRC) layers may exist as higher layers than the PDCP layers of the UE and the ENB, respectively, and for radio resource control, the RRC layers may exchange configuration control messages related to access and measurement.

FIG. 1C illustrates a structure of a next-generation mobile communication system according to an embodiment of the disclosure.

Referring to FIG. 1C, as illustrated therein, a radio access network of a next-generation mobile communication system includes a next-generation base station (new radio node B, hereinafter NR gNB or NR BS ) 1c-10, and a new radio core network (NR CN) or next generation core network (NG CN) 1c-05. A user terminal (new radio user equipment, hereinafter NR UE or terminal) 1c-15 accesses an external network via the NR gNB 1c-10 and the NR CN 1c-05.

In FIG. 1C, the NR gNB 1c-10 corresponds to an evolved node B (eNB) of a conventional LTE system. The NR gNB may be connected to the NR UE 1c-15 through a radio channel, and may provide outstanding services as compared to a conventional node Bs. In the next-generation mobile communication system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the NR gNB 1c-10 serve as the device. In general, one NR gNB controls multiple cells. In order to implement ultrahigh-speed data transfer beyond the current LTE, the next-generation mobile communication system (5G or NR system) may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE. The NR CN 1c-05 performs functions such as mobility support, bearer configuration, and QoS configuration. The NR CN is a device responsible for various control functions as well as a mobility management function for a UE, and is connected to multiple base stations. In addition, the next-generation mobile communication system (5G or NR system) may interwork with the existing LTE system, and the NR CN 1c-05 may be connected to an MME 1c-25 via a network interface. The MME 1c-25 may be connected to an eNB 1c-30 that is an existing base station.

FIG. 1D illustrates a radio protocol structure of a next-generation mobile communication system according to an embodiment of the disclosure.

Referring to FIG. 1D, a radio protocol of a next-generation mobile communication system (5G or NR system) includes an NR SDAP 1d-01 or 1d-45, an NR PDCP 1d-05 or 1d-40, an NR RLC 1d-10 or 1d-35, and an NR MAC 1d-15 or 1d-30 on each of UE and NR base station sides.

The main functions of the NR SDAP 1d-01 or 1d-45 may include some of functions below.
- Transfer of user plane data
- Mapping between a QoS flow and a DRB for both DL and UL
- Marking QoS flow ID in both DL and UL packets
- Reflective QoS flow to DRB mapping for UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1d-05 or 1d-40 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 1d-10 or 1d-35 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The in-sequence delivery of the NR RLC device refers to a function of delivering RLC SDUs, received from the lower layer, to the upper layer in sequence. More specifically, the in-sequence delivery may include a function of, if one original RLC SDU is divided into several RLC SDUs and then the RLC SDUs are received, reassembling the several RLC SDUs and transferring the reassembled RLC SDUs, a function of rearranging received RLC PDUs with reference to RLC sequence numbers (SNs) or PDCP sequence numbers (SNs), a function of rearranging order to record lost RLC PDUs, a function of reporting the state of lost RLC PDUs to a transmission side, a function of requesting retransmission of lost RLC PDUs, a function of, if there is a lost RLC SDU, sequentially transferring only RLC SDUs before the lost RLC SDU to an upper layer, a function of, although there is a lost RLC SDU, if a predetermined timer has expired, sequentially transferring, to an upper layer, all the RLC SDUs received before the timer is started, or a function of, although there is a lost RLC SDU, if a predetermined timer has expired, sequentially transferring all the RLC SDUs received up to the current, to an upper layer.

With regard to this, it is possible to process RLC PDUs in the received order (regardless of the sequence number order, in the order of arrival) and deliver same to the PDCP device regardless of the order (out-of-sequence delivery), and it is also possible to, in the case of segments, receive segments which are stored in a buffer or which are to be received later, reconfigure same into one complete RLC PDU, process and deliver same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 1d-15 or 1d-30 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1E is a flowchart illustrating a procedure of reporting an early measurement result value to a base station by a UE in the disclosure.

Referring to FIG. 1E, in operation 1e-05, a terminal (UE) 1e-01 may establish an RRC connection to a base station (gNB or (ng)-eNB) 1e-02 so as to be in an RRC connected mode (RRC_CONNECTED).

In operation 1e-10, the UE may transmit a UE capability information (UECapabilityInformation) message to the base station. The UE capability information message may contain capability information for early measurement (i.e., capability related to idle and/inactive measurement). That is, the UE capability information message may contain at least one of the following parameters.
- idleInactiveNR-MeasReport-r16 and/or idleInactiveNR-MeasReport-r17: Indicates whether the UE supports configuration of NR SSB measurements in RRC _IDLE/RRC_INACTIVE and reporting of the corresponding results upon network request as specified in TS 38.331. If this parameter is indicated for FR1 and FR2 differently, each indication corresponds to the frequency range of a measured target cell.
- idleInactiveNR-MeasBeamReport-r16: Indicates whether the UE supports beam level measurements in RRC_IDLE/RRC_INACTIVE and reporting of the corresponding beam measurement results upon network request as specified in TS 38.331. A UE supports this feature shall also support idleInactiveNR-MeasReport-r16. If this parameter is indicated for FR1 and FR2 differently, each indication corresponds to the frequency range of a measured target cell.
- idleInactive-NR-MeasBeamReport-r16: Indicates whether the UE supports beam level measurements in RRC _IDLE/RRC_INACTIVE and reporting of the corresponding beam measurement results upon network request as specified in TS 38.331. A UE supports this feature shall also support idleInactiveNR-MeasReport-r16. If this parameter is indicated for FR1 and FR2 differently, each indication corresponds to the frequency range of a measured target cell.
- idleInactiveEUTRA-MeasReport-r16: Indicates whether the UE supports configuration of E-UTRA measurements in RRC__IDLE/RRC_INACTIVE and reporting of the corresponding results upon network request as specified in TS 38.331.
- idleInactive-ValidityArea-r16: Indicates whether the UE supports configuration of a validity area for NR measurements in RRC _IDLE/RRC_INACTIVE as specified in TS 38.331.

In operation 1e-15, the base station 1e-02 may transmit an RRC connection release (RRCRelease) message to the UE 1e-01. The RRC connection release message may contain measurement configuration (measIdleConfig) information to be stored and measured by the UE 1e-01 in an RRC idle mode (RRC_IDLE) and/or an RRC inactive mode (RRC_INACTIVE). Specifically, measIdleConfig may be used to configure or release MeasIdleConfigDedicated-r16, and information that may be contained in MeasIdleConfigDedicated-r16 may be as shown in [Table 1].

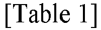

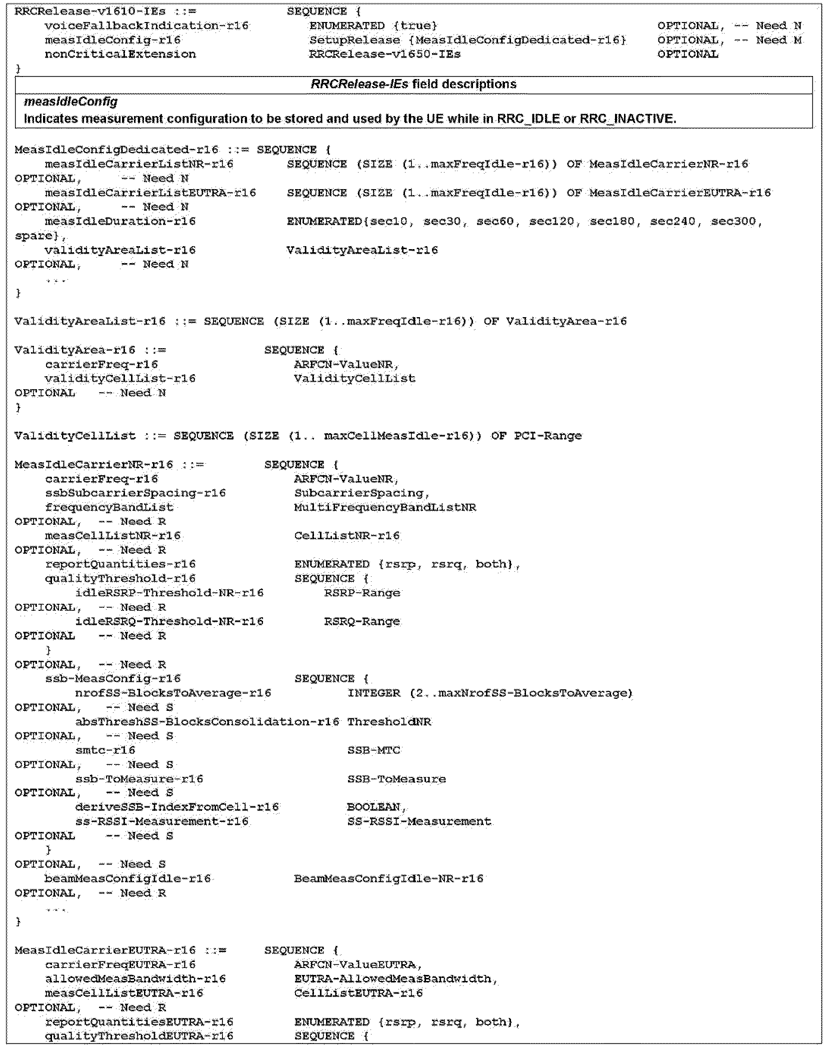

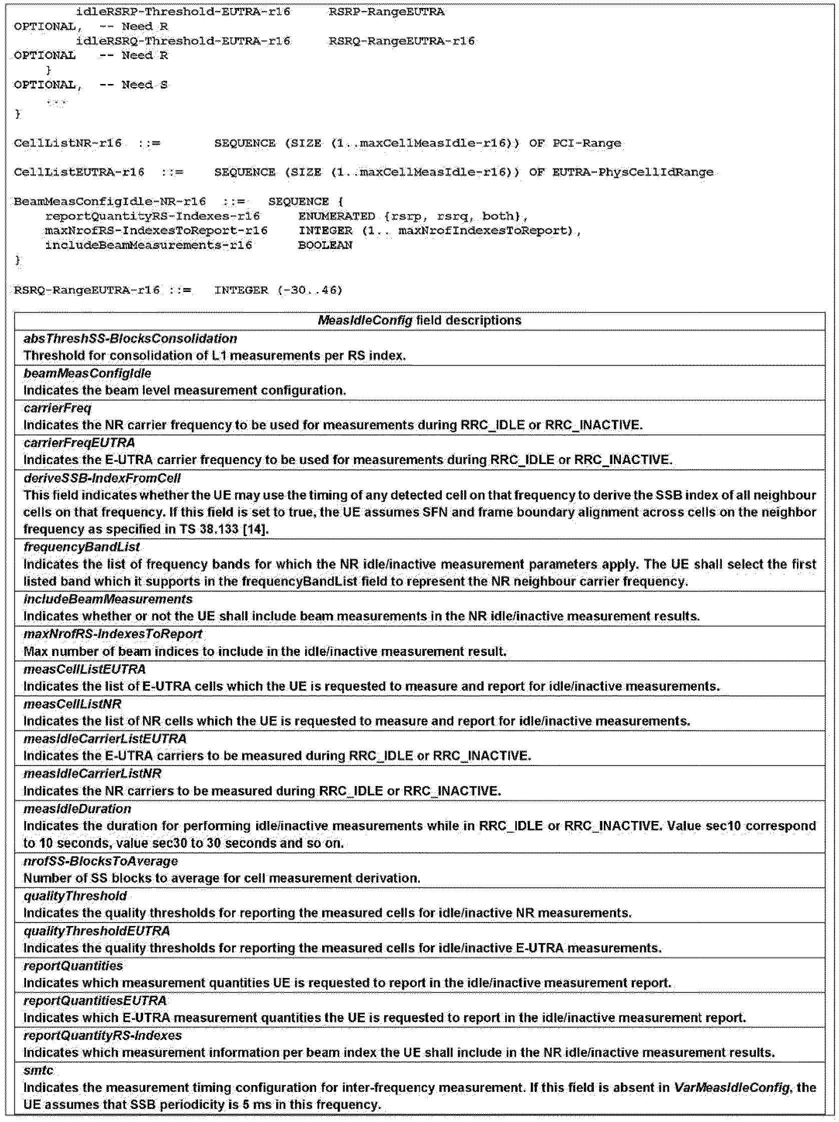

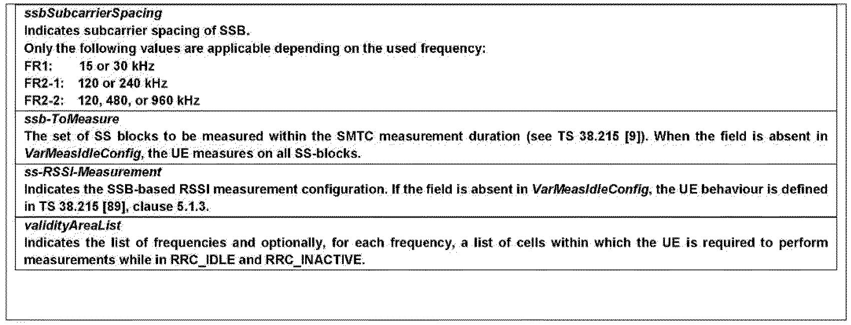

The UE 1e-01 may perform the following specific procedure as shown in [Table 2] when the base station 1e-02 adds measIdleConfig to the RRC connection release message. For reference, the base station 1e-02 needs to add measIdleDuration to measIdleConfig in operation 1e-15, in order for the UE 1e-01 to perform early measurement.

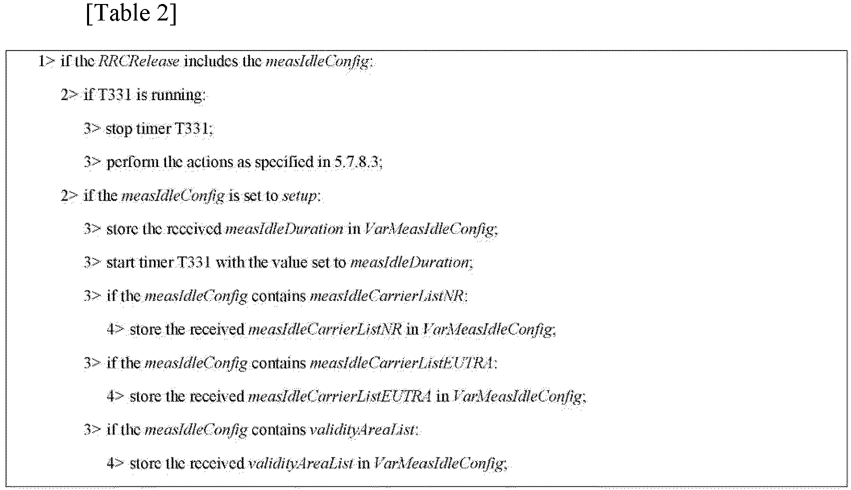

In operation 1e-19, the UE 1e-01 may receive system information.

In operation 1e-20, the UE 1e-01 may transition to the RRC idle mode (RRC_IDLE). In addition, a cell selection or re-selection procedure may be performed based on the system information. In an embodiment, the system information may indicate at least one of MIB, SIB1, SIB2, SIB3, SIB4, SIB5, and SIB16. For reference, when there is no suspension configuration (suspendConfig) information in the RRC connection release message received in operation 1e-15, the UE 1e-01 may transition to the RRC idle mode.

In operation 1e-23, if cell selection or cell re-selection is performed while timer T331 is running, the UE 1e-01 may perform the procedure specified in [Table 3]. That is, only when the conditions specified in [Table 3] are satisfied, the UE 1e-01 may stop timer T331 and perform the operation of [Table 7] described in operation 1e-40.

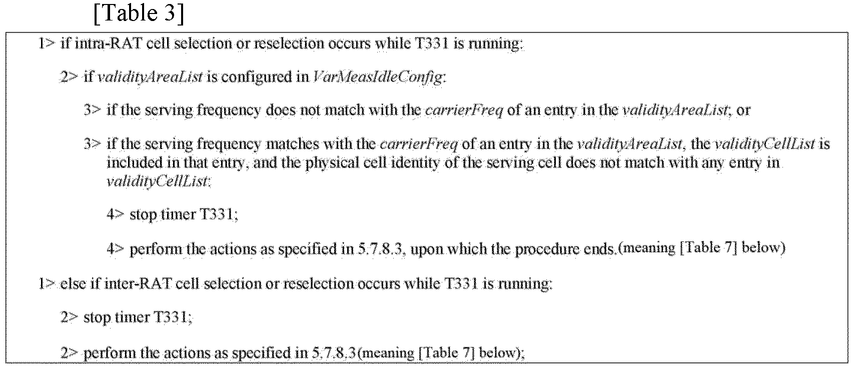

In operation 1e-25, the UE 1e-01 may update an early (idle/inactive) measurement configuration in the RRC idle mode. Specifically, if timer T331 is running while timer T319a is not running, and at least one condition in [Table 4] is satisfied, the UE 1e-01 may update the early measurement configuration.

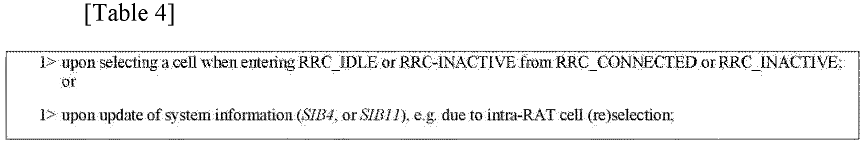

If at least one condition in [Table 4] is satisfied, the UE 1e-01 may update the early measurement configuration as shown in [Table 5].

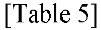

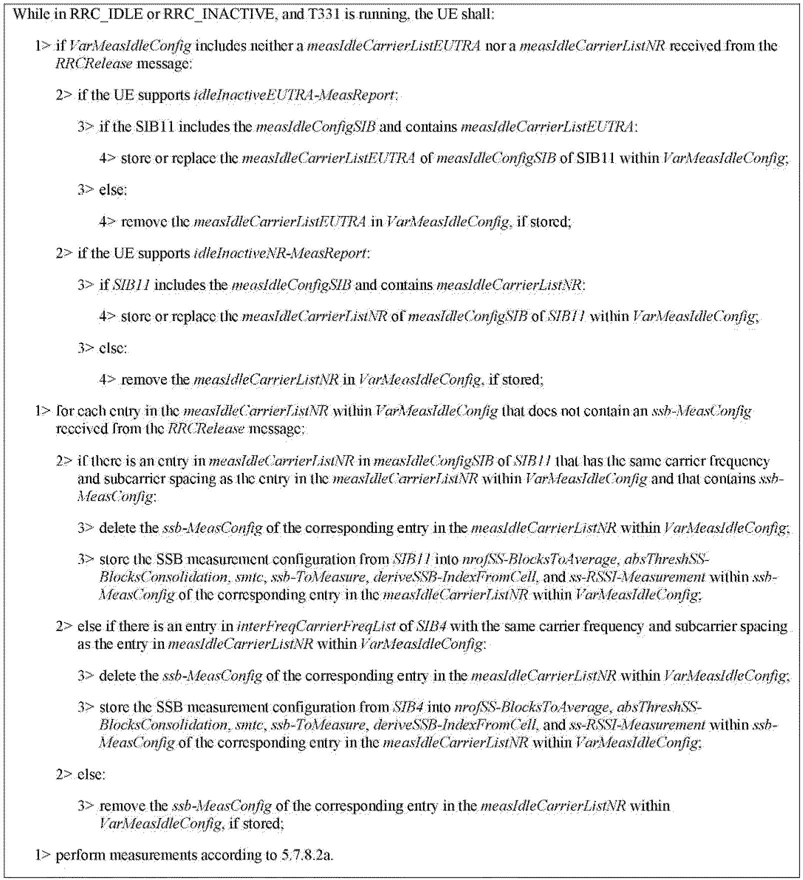

In operation 1e-30, the UE 1e-01 may perform early measurement. Specifically, the UE 1e-01 may perform early measurement as shown in [Table 6].

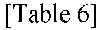

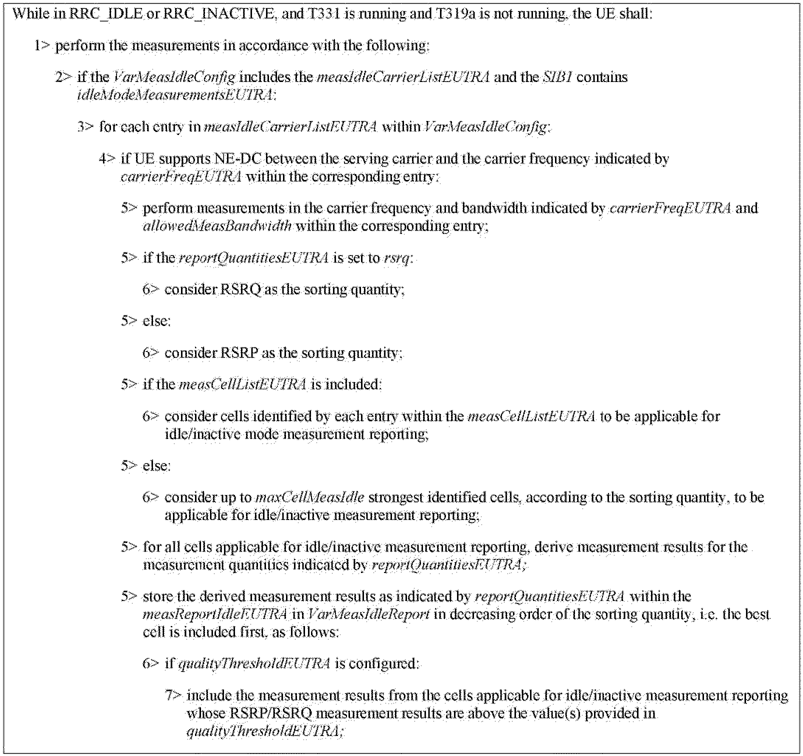

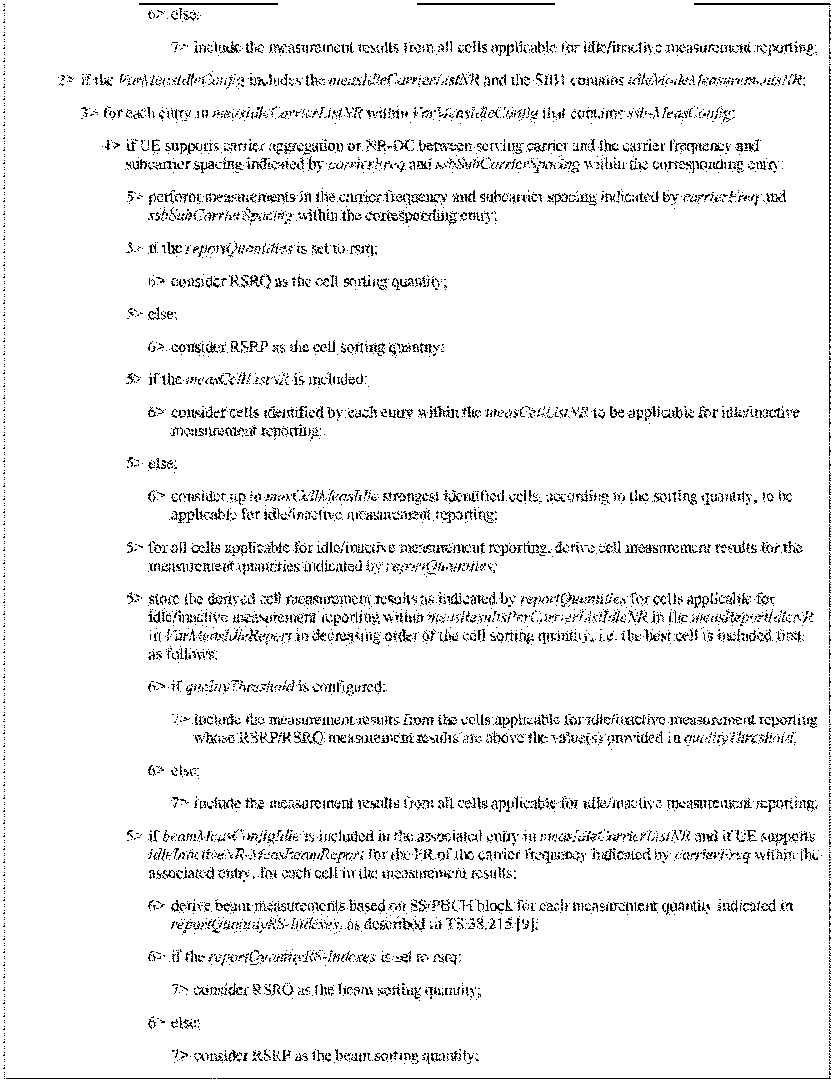

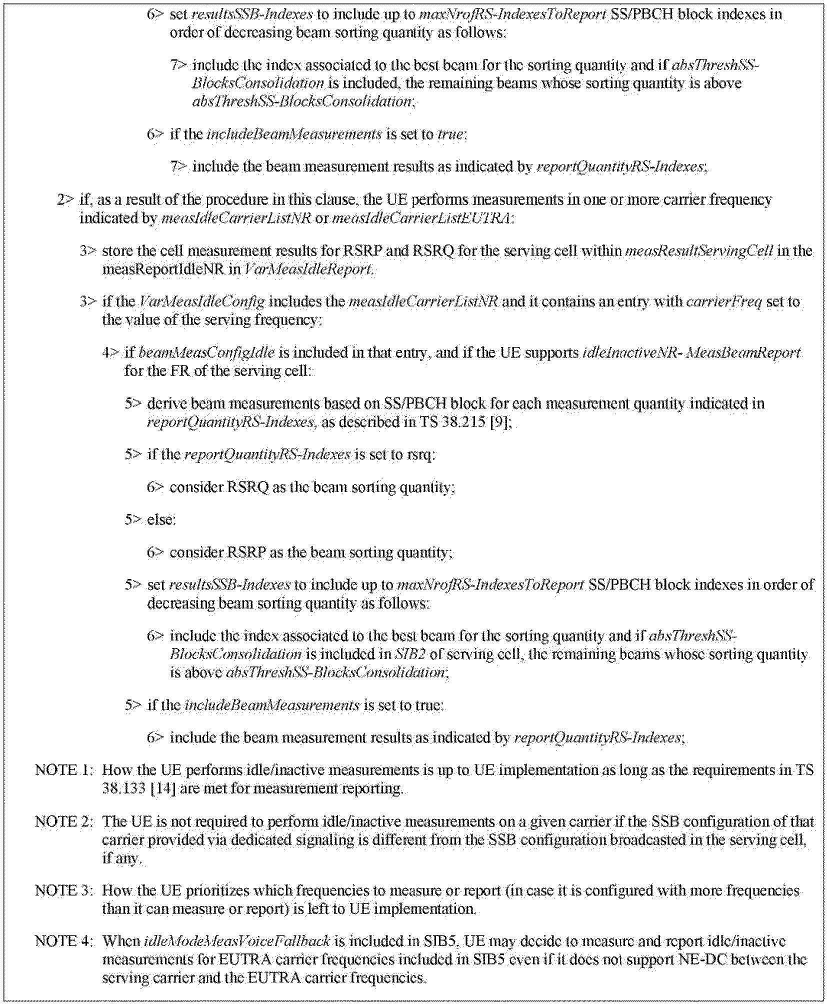

In operation 1e-35, the UE 1e-01 may perform RRC connection establishment to establish an RRC connection to the base station 1e-02. Specifically, the UE 1e-01 may transmit an RRC connection setup request (RRCSetupRequest) message to the base station 1e-02.

In operation 1e-40, in response thereto, the base station 1e-02 may transmit an RRC connection setup (RRCSetup) message to the UE 1e-01. When the RRC connection setup message is received, the UE 1e-01 may stop timer T331 if the timer is running, and perform the procedure of [Table 7].

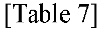

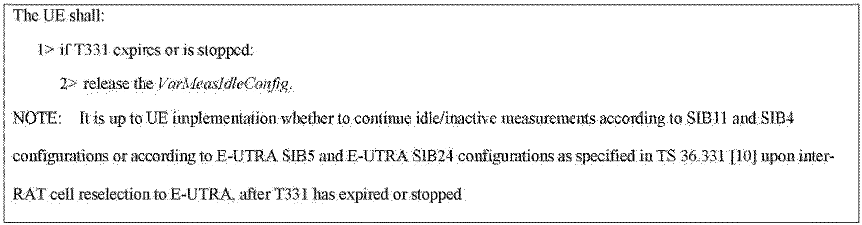

In operation 1e-41, the UE 1e-01 may transition to the RRC connected mode. The UE 1e-01 having transitioned to the RRC connected mode may transmit 1e-43 an RRC connection setup completion (RRCSetupComplete) message to the base station 1e-02. The RRC connection setup completion message may contain an idleMeasAvailable indicator if at least one of the conditions in [Table 8] is satisfied.

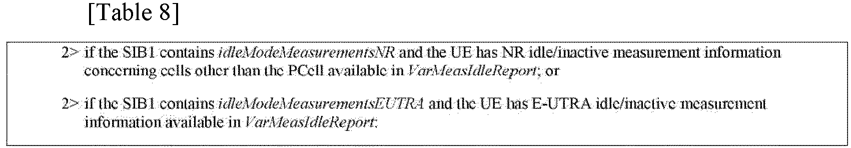

In operation 1e-45, the base station 1e-02 may transmit a UE information request (UEInformationRequest) message to the UE 1e-01 in order to retrieve a measurement result stored in VarMeasIdleReport of the UE 1e-01. That is, the base station 1e-02 may add idleModeMeasurementReq to UEInformationRequest so as to retrieve the measurement result stored in VarMeasIdleReport of the UE 1e-01. In an embodiment, the base station 1e-02 may transmit UEInformationRequest to the UE 1e-01 only when security activation is successfully performed with respect to the UE 1e-01.

In operation 1e-50, the UE 1e-01 may transmit a UE information response (UEInformationResponse) message to the base station 1e-02 in order to report the measurement result stored in VarMeasIdleReport. That is, according to [Table 9], the UE 1e-01 may add the measurement result stored in VarMeasIdleReport to the UEInformation message, and transmit the message to the base station 1e-02.

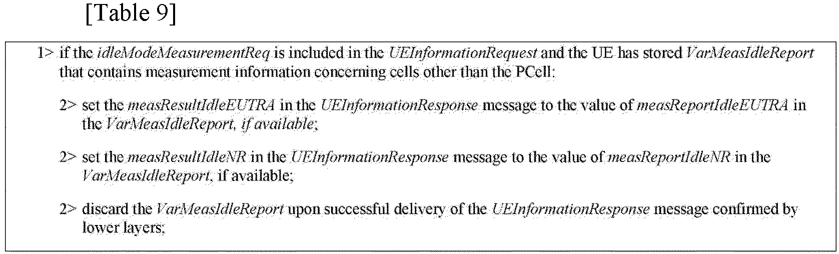

In this case, if the UEInformationResponse message is successfully transferred from lower-layer devices (lower layers), the UE 1e-01 may discard VarMeasIdleReport.

FIG. 1F is a flowchart illustrating a procedure of reporting an early measurement result value to a base station by a UE in the disclosure.

Referring to FIG. 1F, in operation 1f-05, a terminal (UE) 1f-01 may establish an RRC connection to a base station (gNB or (ng)-eNB) 1f-02 so as to be in an RRC connected mode (RRC_CONNECTED).

In operation 1f-10, the UE 1f-01 may transmit a UE capability information (UECapabilityInformation) message to the base station 1f-02. This may follow the aforementioned embodiment.

In operation 1f-15, the base station 1f-02 may transmit an RRC connection release (RRCRelease) message to the UE 1f-01. This may follow the aforementioned embodiment. Additionally, the RRC connection release message may include suspension configuration (suspendConfig) information.

In operation 1f-19, the UE 1f-01 may receive system information.

In operation 1f-20, the UE 1f-01 may transition to an RRC inactive mode (RRC_INACTIVE). In addition, a cell selection or re-selection procedure may be performed based on the system information. This may follow the aforementioned embodiment.

In operation 1f-23, if cell selection or cell re-selection is performed while timer T331 is running, the UE 1f-01 may stop timer T331 according to the aforementioned embodiment, and perform the operation of [Table 7] in the aforementioned embodiment.

In operation 1f-25, the UE 1f-01 may update an early (idle/inactive) measurement configuration in the RRC inactive mode. This may follow the aforementioned embodiment.

In operation 1f-30, the UE 1f-01 may perform early measurement. This may follow the aforementioned embodiment.

In operation 1f-35, the UE 1f-01 may perform RRC resume establishment to resume the RRC connection to the base station 1f-02. Specifically, the UE 1f-01 may transmit an RRC connection resumption request (RRCResumeRequest or RRCResumeRequest1) message to the base station 1f-02.

In operation 1f-40, in response thereto, the base station 1f-02 may transmit an RRC connection resumption (RRCSetup) message to the UE 1f-01. Of course, in operation 1f-40, the base station 1f-02 may transmit an RRC connection setup message (RRCSetup) to the UE 1f-01, and when RRCSetup is received from the base station 1f-02, the UE 1f-01 may perform operation according to the aforementioned embodiment.

When an RRCResume message is received from the base station 1f-02, and timer T331 is running, the UE 1f-01 may stop the timer and perform the operation ([Table 7]) of the aforementioned embodiment.

In operation 1f-41, the UE 1f-01 may transition to the RRC connected mode. The UE 1f-01 having transitioned to the RRC connected mode may transmit an RRC connection resumption completion (RRCResumeComplete) message to the base station 1f-02.

The UE 1f-01 may perform the operation of [Table 10] below according to whether an idleModeMeasurementReq indicator is included in the RRCResume message. That is, if the idleModeMeasurementReq indicator is included in the RRCResume message, the UE 1f-01 may add an early measurement result value stored in VarMeasIdleReport to the RRC connection resumption completion message (RRCResumeComplete) and transmit the message to the base station 1f-02 in operation 1f-43, and otherwise, the UE 1f-01 may add an idleMeasAvailable indicator to RRCResumeComplete and transmit RRCResumeComplete to the base station in operation 1f-43.

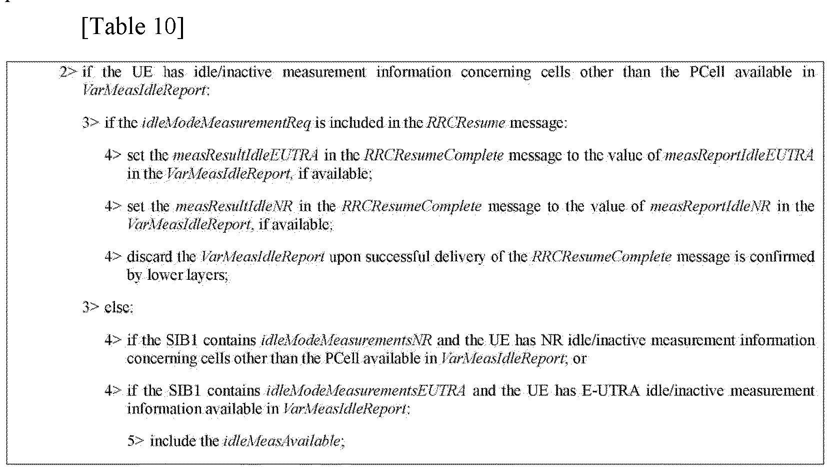

In operation 1f-45, the base station 1f-02 may transmit a UE information request (UEInformationRequest) message to the UE 1f-01 in order to retrieve a measurement result stored in VarMeasIdleReport of the UE 1f-01. This may follow the aforementioned embodiment.

In operation 1f-50, the UE 1f-01 may transmit a UE information response (UEInformationResponse) message to the base station 1f-02 in order to report the measurement result stored in VarMeasIdleReport. This may follow the aforementioned embodiment.

FIG. 1G is a flowchart illustrating a procedure of reporting an outdated early measurement result value to a base station by a UE in the disclosure.

According to the aforementioned embodiments, referring to NOTE in [Table 7] described above, when timer T331 expires or is stopped in the RRC idle mode (RRC_IDLE) or the RRC inactive mode (RRC_INACTIVE), the UE for which measIdleConfig has been configured via the RRC connection release message may release early measurement configuration information, but may continuously perform early measurement based on the system information. That is, when timer T331 expires or is stopped, the UE may perform or may not perform early measurement according to implementation.

NOTE: It is up to UE implementation whether to continue idle/inactive measurements according to SIB11 and SIB4 configurations or according to E-UTRA SIB5 and E-UTRA SIB24 configurations as specified in TS 36.331 [10] upon inter-RAT cell reselection to E-UTRA, after T331 has expired or stopped.

However, according to the aforementioned embodiments, the UE releases the early measurement result value stored in VarMeasIdleReport only when the UE successfully reports, to the base station, the early measurement result value stored in VarMeasIdleReport. Therefore, when timer T331 expires or is stopped, and early measurement has not been performed for a long time based on the system information, the UE may have a problem of reporting, to the base station, early measurement performed and stored a very long time ago.

Referring to FIG. 1G, in operation 1g-05, a UE 1g-01 may establish an RRC connection to a base station 1g-02 so as to be in an RRC connected mode (RRC_CONNECTED).

In operation 1g-10, the UE 1g-01 may transmit a UE capability information (UECapabilityInformation) message to the base station 1g-02. This may follow the aforementioned embodiments.

In operation 1g-15, the base station 1g-02 may transmit an RRC connection release (RRCRelease) message to the UE 1g-01. This may follow the aforementioned embodiments.

In operation 1g-19, the UE 1g-01 may receive system information.

In operation 1g-20, the UE 1g-01 may transition to an RRC inactive mode (RRC_INACTIVE) or an RRC idle mode (RRC _IDLLE) according to the embodiments described above. In addition, a cell selection or re-selection procedure may be performed based on the system information. This may follow the aforementioned embodiments.

In operation 1g-25, the UE 1g-01 may update an early measurement configuration if necessary. This may follow the aforementioned embodiments.

In operation 1g-30, the UE 1g-01 may perform early measurement. This may follow the aforementioned embodiments.

In operation 1g-35, the UE 1g-01 may stop timer T331 that is running, or the running timer T331 may expire. In an embodiment, if timer T331 is running, the UE 1g-01 may stop the running timer T331 according to [Table 3] of the aforementioned embodiment or when an RRCSetup message or an RRCResume message is received from the base station.

In operation 1g-40, the UE 1g-01 may not perform early measurement (for a long time) based on the system information. However, the UE 1g-01 still has an early measurement result value stored in VarMeasIdleReport.

In operation 1g-41, the UE 1g-01 may perform an RRC connection setup procedure or an RRC connection resumption procedure with the base station 1g-02 so as to transition to the RRC connected mode. This may follow the aforementioned embodiments.

In operation 1g-43, the UE 1g-01 may add idleModeAvailable to an RRC connection setup completion message or an RRC resumption completion message, and transmit the message to the base station. This may follow the aforementioned embodiments.

In operation 1g-45, the base station 1g-02 may transmit a UE information request (UEInformationRequest) message to the UE 1g-01 in order to retrieve a measurement result stored in VarMeasIdleReport of the UE 1g-01. This may follow the aforementioned embodiment.

In operation 1g-50, the UE 1g-01 may transmit a UE information response (UEInformationResponse) message to the base station 1g-02 in order to report the measurement result stored in VarMeasIdleReport. This may follow the aforementioned embodiment. The UE 1g-01 may report, to base station 1g-02, the early measurement result value obtained in operation 1g-30, but this may indicate an outdated early measurement result value. That is, depending on how long operation 1g-40 continues, the early measurement result value may be an outdated early measurement result value.

FIG. 1H is a flowchart for a method of releasing an early measurement result value by a UE in the disclosure.

Referring to FIG. 1H, in operation 1h-05, a terminal (UE) 1h-01 may establish an RRC connection to a base station (gNB or (ng)-eNB) 1h-02 so as to be in an RRC connected mode (RRC_CONNECTED).

In operation 1h-10, the UE 1h-01 may transmit a UE capability information (UECapabilityInformation) message to the base station 1h-02. This may follow the aforementioned embodiments. Additionally, the UE capability information message may contain capability information on whether to discard an early measurement result value stored in VarMeasIdleReport when the base station indicates to release the same via an RRC connection release message.

In operation 1h-15, the base station 1h-02 may transmit an RRC connection release (RRCRelease) message to the UE 1h-01. This may follow the aforementioned embodiments. Additionally, the RRC connection release message may include an indicator indicating to, when there is an early measurement result value stored in VarMeasIdleReport of the UE 1h-01, release the early measurement result value. Specifically, if the indicator is included in the RRC connection release message, the UE 1h-01 may release the early measurement result value stored in VarMeasIdleReport. On the other hand, if the indicator is not included in the RRC connection release message, the UE 1h-01 may maintain the early measurement result value stored in VarMeasIdleReport. For reference, if measIdleConfig is included in the RRC connection release message, the aforementioned operation may be performed first, and then measIdleConfig may be applied according to the embodiments described above. In addition, the aforementioned indicator and UE operation may be applied only to the RRC connection release message containing suspendConfig.

In operation 1h-19, the UE 1h-01 may receive system information.

In operation 1h-20, the UE 1h-01 may transition to an RRC inactive mode (RRC_INACTIVE) or an RRC idle mode (RRC_IDLLE) according to the embodiments described above. In addition, a cell selection or re-selection procedure may be performed based on the system information. This may follow the aforementioned embodiments.

In operation 1h-25, the UE 1h-01 may update an early measurement configuration if necessary. This may follow the aforementioned embodiments.

In operation 1h-30, the UE 1h-01 may perform early measurement. This may follow the aforementioned embodiments.

In operation 1h-35, the UE 1h-01 may perform an RRC connection setup procedure or an RRC connection resumption procedure with the base station 1h-02 so as to transition to the RRC connected mode. This may follow the aforementioned embodiments.

In operation 1h-40, the UE 1h-01 may add idleModeAvailable to an RRC connection setup completion message or an RRC resumption completion message, and transmit the message to the base station 1h-02. This may follow the aforementioned embodiments.

In operation 1h-45, the base station 1h-02 may transmit the RRC connection release message to the UE 1h-01 so as to enable the UE 1h-01 in the RRC connected mode to transition to the RRC idle mode or the RRC inactive mode. If the RRC connection release message includes an indicator indicating to, when there is an early measurement result value stored in VarMeasIdleReport, release the early measurement result value, the UE 1h-01 may discard VarMeasIdleReport.

The UE 1h-01 having received the RRC connection release message transitions to the RRC idle mode or the RRC inactive mode.

In operation 1h-50, the UE 1h-01 in the RRC idle mode or the RRC inactive mode may transition to the RRC connected mode by performing an RRC connection setup procedure or an RRC connection resumption procedure with the base station 1h-02. This may follow the aforementioned embodiments.

In operation 1h-55, the UE 1h-01 may transmit an RRC connection setup completion message or an RRC resumption completion message to the base station 1h-02 without including idleModeAvailable.

FIG. 1I is a flowchart for a method of releasing an early measurement result value by a UE in the disclosure.

Referring to FIG. 1I, in operation 1i-05, a terminal (UE) 1i-01 may establish an RRC connection to a base station (gNB or (ng)-eNB) 1i-02 so as to be in an RRC connected mode (RRC_CONNECTED).

In operation 1i-10, the UE 1i-01 may transmit a UE capability information (UECapabilityInformation) message to the base station 1i-02. This may follow the aforementioned embodiments. Additionally, the UE capability information message may include capability information on whether VarMeasIdleReport can be released according to whether timer T331 is running if there is an early measurement result value stored in VarMeasIdleReport during a 2-step resume procedure (e.g., even if the UE has transmitted, to the base station, RRCResumeRequest or RRCResumeRequest1 for an RRC connection resumption procedure, the base station, in response thereto, transmits RRCRelease including suspension configuration information to the UE so that the UE 1i-01 continues to be in an RRC inactive mode).

In operation 1i-15, the base station 1i-02 may transmit an RRC connection release message (RRCRelease) to the UE 1i-01 so as to enable the UE 1h-01 to transition to the RRC inactive mode. This may follow the aforementioned embodiments.

In operation 1i-19, the UE 1i-01 may receive system information.

In operation 1i-20, the UE 1i-01 may transition to the RRC inactive mode.

In operation 1i-25, the UE 1i-01 may update an early measurement configuration if necessary. This may follow the aforementioned embodiments.

In operation 1i-30, the UE 1i-01 may perform early measurement. This may follow the aforementioned embodiments.

In operation 1i-35, the UE 1i-01 may transmit an RRC connection resumption request message (RRCResumeRequest or RRCResumeRequest1) to the base station 1i-02 to initiate a 2-step resume procedure. The UE 1i-01 may set resumeCause with rna-Update and transmit the RRC connection resumption request message to the base station 1i-02.

In operation 1i-40, the base station 1i-02 may transmit an RRC connection release message including suspension configuration information to the UE 1i-01.

In operation 1i-45, the UE 1i-01 may maintain VarMeasIdleReport if timer T331 is running. If timer T331 is not running, the UE 1i-01 may release VarMeasIdleReport.

FIG. 1J is a flowchart for a method of releasing an early measurement result value by a UE in the disclosure.

Referring to FIG. 1J, in operation 1j-05, a terminal (UE) 1j-01 may establish an RRC connection to a base station (gNB or (ng)-eNB) 1j-02 so as to be in an RRC connected mode (RRC_CONNECTED).

In operation 1j-10, the UE 1j-01 may transmit a UE capability information (UECapabilityInformation) message to the base station 1j-02. This may follow the aforementioned embodiments. Additionally, the UE capability information message may include capability information on whether the UE 1j-01 releases VarMeasIdleReport when running timer T331 expires and/or when timer T331 is stopped. Alternatively, the UE capability information message may include capability information on whether the UE no longer performs early measurement based on system information when running timer T331 expires and/or when timer T331 is stopped.

In operation 1j-15, the base station 1j-02 may transmit an RRC connection release (RRCRelease) message to the UE 1j-01. This may follow the aforementioned embodiments. Additionally, the RRC connection release message may include an indicator on whether the UE 1j-01 releases VarMeasIdleReport when running timer T331 expires and/or when timer T331 is stopped. If the indicator is included, when timer T331 expires or timer T331 is stopped, the UE 1j-01 may, if there is an early measurement result value stored in VarMeasIdleReport, release the early measurement result value. In addition, the UE 1j-01 may not perform early measurement. If the indicator is not included, the UE 1j-01 may follow the embodiments described above. Alternatively, the RRC connection release message may include an indicator indicating whether the UE 1j-01 no longer performs early measurement based on system information when running timer T331 expires and/or when timer T331 is stopped. If the indicator is included, the UE 1j-01 may no longer perform early measurement based on the system information. In addition, early measurement stored in VarMeasIdleReport may be released. If the indicator is not included, the UE 1j-01 may follow the embodiments described above. For reference, if measIdleConfig is included in the RRC connection release message, the aforementioned operation may be performed first, and then measIdleConfig may be applied according to the embodiments described above.

FIG. 1K is a flowchart in which, when a UE stores an early measurement result value, a time stamp is also stored, in the disclosure.

Referring to FIG. 1K, in operation 1k-05, a terminal (UE) 1k-01 may establish an RRC connection to a base station (gNB or (ng)-eNB) 1k-02 so as to be in an RRC connected mode (RRC_CONNECTED).

In operation 1k-10, the UE 1k-01 may transmit a UE capability information (UECapabilityInformation) message to the base station 1k-02. This may follow the aforementioned embodiments. Additionally, the UE capability information message may include capability information on whether the UE 1k-01 can also store a time stamp when storing an early measurement result in VarMeasIdleReport.

In operation 1k-15, the base station 1k-02 may transmit an RRC connection release message (RRCRelease) to the UE 1k-01. This may follow the aforementioned embodiments.

In operation 1k-19, the UE 1k-01 may receive system information.

In operation 1k-20, the UE 1k-01 may transition to an RRC inactive mode (RRC_INACTIVE) or an RRC idle mode (RRC _IDLLE) according to the embodiments described above. In addition, a cell selection or re-selection procedure may be performed based on the system information. This may follow the aforementioned embodiments.

In operation 1k-25, the UE 1k-01 may update an early measurement configuration if necessary. This may follow the aforementioned embodiments.

In operation 1k-30, the UE 1k-01 may perform early measurement. This may follow the aforementioned embodiments. When the UE 1k-01 performs early measurement and stores the same in VarMeasIdleReport, time stamp information may also be stored in VarMeasIdleReport. This is because, based on the information, the base station 1k-02 may determine whether the information is outdated information when retrieving the early measurement from the UE 1k-01.

In operation 1k-35, the UE 1k-01 may perform an RRC connection setup procedure or an RRC connection resumption procedure with the base station 1k-02. This may follow the aforementioned embodiments. In addition, when transmitting RRCResumeComplete to the base station 1k-02, the UE 1k-01 may also include the time stamp information when reporting VarMeasIdleReport.

In operation 1k-40, the base station 1k-02 may transmit a UE information request (UEInformationRequest) message to the UE 1k-01 in order to retrieve a measurement result stored in VarMeasIdleReport of the UE 1k-01. This may follow the aforementioned embodiment.

In operation 1k-50, the UE 1k-01 may transmit a UE information response (UEInformationResponse) message to the base station 1k-02 in order to report the measurement result stored in VarMeasIdleReport. This may follow the aforementioned embodiment. Additionally, the UE 1k-01 may include the time stamp information in VarMeasIdleReport. In an embodiment, the time stamp information may be included for each cell.

FIG. 1L is a flowchart for a method of releasing an early measurement result value by a UE in the disclosure.

Referring to FIG. 1L, in operation 11-05, a terminal (UE) 11-01 may establish an RRC connection to a base station (gNB or (ng)-eNB) 1i-02 so as to be in an RRC connected mode (RRC_CONNECTED).

In operation 1l-10, the UE 11-01 may transmit a UE capability information message (UECapabilityInformation) to the base station 1i-02. This may follow the aforementioned embodiments. Additionally, the UE capability information message may contain capability information on whether VarMeasIdleReport can be released if an RRC connection release message does not include a measIdleDuration value.

In operation 1l-15, the base station 1i-02 may transmit an RRC connection release (RRCRelease) message to the UE 11-01. If the RRC connection release message includes no measIdleDuration value and includes VarMeasIdleReport, the UE 11-01 may release VarMeasIdleReport. The procedure described above may be applied to all cases or may be applied only to a 2-step resumption procedure. Alternatively, the procedure may be applied only when timer T331 expires or is stopped.

FIG. 1M is a flowchart for a method of releasing an early measurement result value by a UE in the disclosure.

Referring to FIG. 1M, in operation 1m-05, a terminal (UE) 1m-01 may establish an RRC connection to a base station (gNB or (ng)-eNB) 1m-02 so as to be in an RRC connected mode (RRC_CONNECTED).

In operation 1m-10, the UE 1m-01 may transmit a UE capability information message (UECapabilityInformation) to the base station 1m-02. This may follow the aforementioned embodiments. Additionally, the UE capability information message may include capability information that new timer information is applicable, the new timer information indicating when to release VarMeasIdleReport of the UE 1m-01.

In operation 1m-15, the base station 1m-02 may transmit an RRC connection release (RRCRelease) message to the UE 1m-01. The RRC connection release message may include a new timer value for when to release VarMeasIdleReport. That is, when a new timer expires, the UE 1m-01 may release VarMeasIdleReport. For reference, the UE 1m-01 may run the new timer with the new timer value when the RRC connection release message is received, or may run the new timer with the new timer value when timer T331 expires or when running timer T331 is stopped. If the new timer expires, the UE 1m-01 may release VarMeasIdleReport. Of course, when the new timer expires, the UE 1m-01 may not transmit a predetermined RRC message including idleMeasAvailable to the base station 1m-02. For reference, the UE 1m-01 may continue to run the new timer even when VarMeasIdleConfig is released.

FIG. 1N is a flowchart for a method of releasing an early measurement result value by a UE in the disclosure.

Referring to FIG. 1N, in operation 1n-10, a terminal (UE) 1n-01 may establish an RRC connection to a base station (gNB or (ng)-eNB) 1n-02 so as to be in an RRC connected mode (RRC_CONNECTED).

In operation 1n-10, the UE 1n-01 may transmit a UE capability information (UECapabilityInformation) message to the base station 1n-02. This may follow the aforementioned embodiment. Additionally, the UE capability information message may include capability information that new timer information is applicable, the new timer information indicating when to release VarMeasIdleReport of the UE 1n-01.

In operation 1n-15, the base station 1n-02 may transmit an RRC connection release message (RRCRelease) to the UE 1n-01. The RRC connection release message may include a new timer value for when to release VarMeasIdleReport. Of course, the new timer value may be included in another predetermined RRC message.

In operation 1n-20, the UE 1n-01 may perform an RRC connection setup procedure or an RRC connection resumption procedure with the base station 1n-02 so as to transition to the RRC connected mode. This may follow the aforementioned embodiments.

In operation 1n-25, the UE 1n-01 may add idleModeAvailable to an RRC connection setup completion message or an RRC resumption completion message, and transmit the message to the base station 1n-02. This may follow the aforementioned embodiments. In this case, additionally, the UE 1n-01 may run a new timer with the new timer value received from the base station 1n-02.

In operation 1n-30, the new timer may expire.

In operation 1n-35, the base station 1n-02 may transmit a UE information request (UEInformationRequest) message to the UE 1n-01 in order to retrieve a measurement result stored in VarMeasIdleReport of the UE 1n-01. This may follow the aforementioned embodiment. Of course, when the base station 1n-02 identifies that the new timer value has expired, operation 1n-35 may not be performed.

In operation 1n-40, since the UE 1n-01 has released VarMeasIdleReport at the expiration of the new timer, the UE 1n-01 may transmit, to the base station 1n-02, an indicator in a UE information response (UEInformationResponse) message, wherein the indicator is to indicate the release of VarMeasIdleReport.

FIG. 1O is a flowchart in which a UE transmits, to a base station, and indicator indicating that an early measurement result value has been released, in the disclosure.

Referring to FIG. 1O, in operation 1o-05, a terminal (UE) 1o-01 may establish an RRC connection to a base station (gNB or (ng)-eNB) 1o-02 so as to be in an RRC connected mode (RRC_CONNECTED).

In operation 1o-10, the UE 1o-01 may transmit a UE capability information (UECapabilityInformation) message to the base station 1o-02. This may follow the aforementioned embodiments. Additionally, the UE capability information message may include capability information including, in RRCResumeComplete or RRCSetupComplete, an indicator indicating that VarMeasIdleReport has been released.

In operation 1o-15, the base station 1o-02 may transmit an RRC connection release message (RRCRelease) to the UE 1o-01. In operation 1o-20, the UE 1o-01 may perform an RRC connection setup procedure or an RRC connection resumption procedure with the base station 1o-02 so as to transition to the RRC connected mode. This may follow the aforementioned embodiments.

In operation 1o-25, the UE 1o-01 may add an indicator indicating that VarMeasIdleReport has been released to an RRC connection setup completion message or an RRC resumption completion message. In an embodiment, the base station 1o-02 adds idleModeMeasurementReq to the RRCResume message, but when the UE 1o-01 releases VarMeasIdleReport, the RRC connection resumption complete message may include an indicator indicating that VarMeasIdleReport has been released. The method of releasing VarMeasIdleReport by the UE 1o-01 may follow one of the embodiments described above. Additionally, if idleMeasAvailable is not included in the RRC connection setup completion message or the RRC resumption completion message, the UE 1o-01 may release VarMeasIdleReport and perform transmission to the base station 1o-02 while including the indicator indicating the release of VarMeasIdleReport.

FIG. 1P is a block diagram illustrating an internal structure of a UE according to an embodiment of the disclosure.

Referring to FIG. 1P, the UE may include a radio frequency (RF) processor 1p-10, a baseband processor 1p-20, a storage unit 1p-30, and a controller 1p-40. Of course, the example given above is not limiting, and the UE may include more components than those illustrated in FIG. 1P or may include less components than those illustrated in FIG. 1P.

The RF processor 1p-10 may perform a function for transmitting and receiving a signal via a wireless channel, such as band conversion and amplification of the signal. That is, the RF processor 1p-10 may up-convert a baseband signal provided from the baseband processor 1p-20 to an RF band signal, may transmit the same through an antenna, and may down-convert an RF band signal received through the antenna to a baseband signal. For example, the RF processor 1p-10 may include a transmission filter, a reception filter, an amplifier, a mixer, an oscillator, a digital-to-analog converter (DAC), an analog-to-digital converter (ADC), and the like. Obviously, the example given above is not limiting. Although only one antenna is illustrated in FIG. 1P, the UE may include multiple antennas. In addition, the RF processor 1p-10 may include multiple RF chains. Furthermore, the RF processor 1p-10 may perform beamforming. For the beamforming, the RF processor 1p-10 may adjust the phase and magnitude of each of signals transmitted and received through multiple antennas or antenna elements. In addition, the RF processor 1p-10 may perform MIMO, and may receive multiple layers when performing MIMO operations.

The baseband processor 1p-20 may perform functions of conversion between baseband signals and bitstrings according to the system's physical layer specifications. For example, during data transmission, the baseband processor 1p-20 may encode and modulate a transmitted bitstring to generate complex symbols. In addition, during data reception, the baseband processor 1p-20 may demodulate and decode a baseband signal provided from the RF processor 1p-10 to restore a received bitstring. For example, when following the orthogonal frequency division multiplexing (OFDM) scheme, during data transmission, the baseband processor 1p-20 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1p-20 may split a baseband signal provided from the RF processor 1i-10 at the OFDM symbol level, may restore signals mapped to subcarriers through a fast Fourier transform (FFT) operation, and may restore a received bitstring through demodulation and decoding.

The baseband processor 1p-20 and the RF processor 1p-10 may transmit and receive signals as described above. Accordingly, each of the baseband processor 1p-20 and the RF processor 1p-10 may be referred to as a transmitter, a receiver, a transceiver, or a communicator. Furthermore, at least one of the baseband processor 1p-20 and the RF processor 1p-10 may include multiple communication modules to support multiple different radio access technologies. In addition, at least one of the baseband processor 1p-20 and the RF processor 1p-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2 NRHz) bands and millimeter wave (mmWave) (e.g., 60GHz) bands. The UE may transmit/receive a signal with the base station by using the baseband processor 1p-20 and the RF processor 1p-10, and the signal may include control information and data.

The storage unit 1p-30 may store data such as a basic program, an application, or configuration information for the operations of the UE. The storage unit 1p-30 may store data such as basic programs, application programs, and configuration information for the above-described operations of the UE. In addition, the storage unit 1p-30 may provide the stored data at the request of the controller 1p-40.

The controller 1p-40 may control the overall operation of the UE. For example, the controller 1p-40 may transmit/receive signals through the baseband processor 1p-20 and the RF processor 1p-10. In addition, the controller1p-40 records data in the storage unit 1p-30 and reads the data from the storage unit 1p-30. To this end, the controller 1p-40 may include at least one processor. For example, the controller 1p-40 may include a communication processor (CP) configured to perform control for communication, and an application processor (AP) configured to control upper layers such as application programs. In addition, according to an embodiment of the disclosure, the controller 1p-40 may include a multi-connection processor 1p-42 configured to process processes operating in a multi-connection mode. In addition, at least one component in the UE may be implemented as a single chip.

FIG. 1Q is a block diagram illustrating a structure of an NR base station according to an embodiment of the disclosure.

As illustrated in FIG. 1Q, the base station may include an RF processor 1q-10, a baseband processor 1q-20, a backhaul communication unit 1q-30, a storage unit 1q-40, and a controller 1q-50. Of course, the example given above is not limiting, and the base station may include more components than those illustrated in FIG. 1Q or may include less components than those illustrated in FIG. 1Q.

The RF processor 1q-10 may perform a function for transmitting and receiving a signal via a wireless channel, such as band conversion and amplification of the signal. That is, the RF processor 1q-10 may up-convert a baseband signal provided from the baseband processor 1q-20 to an RF band signal, may transmit the same through an antenna, and may down-convert an RF band signal received through the antenna to a baseband signal. For example, the RF processor 1q-10 may include a transmission filter, a reception filter, an amplifier, a mixer, an oscillator, a DAC, and an ADC. Although only one antenna is illustrated in FIG. 1Q, the RF processing unit 1q-10 may include multiple antennas.

In addition, the RF processor 1q-10 may include multiple RF chains. Furthermore, the RF processor 1q-10 may perform beamforming. For the beamforming, the RF processor 1q-10 may adjust the phase and magnitude of each of signals transmitted and received through multiple antennas or antenna elements. The RF processing unit 1q-10 may transmit one or more layers to perform a downward MIMO operation.

The baseband processor 1q-20 may perform functions of conversion between baseband signals and bitstrings according to the system's physical layer specifications. For example, during data transmission, the baseband processor 1q-20 may encode and modulate a transmitted bitstring to generate complex symbols. In addition, during data reception, the baseband processor 1q-20 may demodulate and decode a baseband signal provided from the RF processor 1q-10 to restore a received bitstring. For example, when following the OFDM scheme, during data transmission, the baseband processor 1q-20 may encode and modulate a transmitted bitstring to generate complex symbols, may map the complex symbols to subcarriers, and may configure OFDM symbols through an IFFT operation and CP insertion. In addition, during data reception, the baseband processor 1q-20 may split a baseband signal provided from the RF processor 1q-10 at the OFDM symbol level, may restore signals mapped to subcarriers through FFT operation, and may restore a received bitstring through demodulation and decoding. The baseband processor 1q-20 and the RF processor 1q-10 may transmit and receive signals as described above. Therefore, the baseband processor 1q-20 and the RF processor 1q-10 may be referred to as a transmitter, a receiver, a transceiver, a communication unit, or a wireless communication unit. The base station may transmit/receive a signal with the UE by using the baseband processor 1q-20 and the RF processor 1q-10, and the signal may include control information and data.

The backhaul communication unit 1q-30 may provide an interface for performing communication with other nodes within a network. That is, the backhaul communication unit qj-30 may convert bitstrings transmitted from the main base station to other nodes (for example, auxiliary base station, core network) to physical signals, and may convert physical signals received from the other nodes to bitstrings.

The storage unit 1q-40 may store data such as basic programs, application programs, and configuration information for the operations of the base station. Particularly, the storage unit 1q-40 may store information regarding a bearer allocated to a connected UE, a measurement result reported from the connected UE, and the like. In addition, the storage unit 1q-40 may store information serving as a reference to determine whether to provide multi-connection to a UE or to suspend the same. In addition, the storage unit 1q-40 may provide the stored data at the request of the controller 1q-50. The storage unit 1q-40 may be configured by a storage medium such as a ROM, a RAM, a hard disk, a CD-ROM, and a DVD, or a combination of storage mediums. In addition, the storage unit 1q-40 may be configured by multiple memories.

The controller 1q-50 may control the overall operation of the base station. For example, the controller 1q-50 may transmit/receive signals through the baseband processor 1q-20 and the RF processor 1q-10 or through the backhaul communication unit 1q-30. In addition, the controller 1q-50 records data in the storage unit 1q-40 and reads the data from the storage 1q-40. To this end, the controller 1q-50 may include at least one processor. In addition, according to an embodiment of the disclosure, the controller 1q-50 may include a multi-connection processor 1q-52 configured to process processes operating in a multi-connection mode.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. **In** addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

**In** the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. Furthermore, other variants of the above embodiments, based on the technical idea of the embodiments, may also be implemented in other systems such as LTE, 5G, or NR systems.

## Claims

1. A method performed by a user equipment in a wireless communication system, the method comprising:
receiving a radio resource control (RRC) message comprising measurement configuration information from a base station;
based on the RRC message, transmitting a first message comprising user equipment capability information to the base station;
receiving an RRC connection release message comprising idle mode measurement configuration information from the base station;
based on the RRC connection release message, identifying whether idle mode measurement interval information is included in the idle mode measurement configuration information; and
in case that the RRC connection release message does not include the idle mode measurement interval information, discarding stored measurement information.

2. The method of claim 1, wherein the idle mode measurement configuration information indicates measurement configuration information used in an idle mode or an inactive mode, and
wherein the idle mode measurement interval information indicates a period at which measurement is performed in the idle mode or the inactive mode.

3. The method of claim 2, further comprising performing measurement in the idle mode or the inactive mode until a timer based on the idle mode measurement interval information expires or is stopped.

4. The method of claim 2, further comprising:
receiving a second message comprising system information from the base station; and
in case that a timer based on the idle mode measurement interval information expires or is stopped, identifying, based on the system information, whether to continue performing the measurement.

5. A user equipment in a wireless communication system, the user equipment comprising:
at least one transceiver; and
a controller coupled with the at least one transceiver,
wherein the controller is configured to:
receive a radio resource control (RRC) message comprising measurement configuration information from a base station;
based on the RRC message, transmit a first message comprising user equipment capability information to the base station;
receive an RRC connection release message comprising idle mode measurement configuration information from the base station;
based on the RRC connection release message, identify whether idle mode measurement interval information is included in the idle mode measurement configuration information; and
in case that the RRC connection release message does not include the idle mode measurement interval information, discard stored measurement information.

6. The user equipment of claim 5, wherein the idle mode measurement configuration information indicates measurement configuration information used in an idle mode or an inactive mode, and
wherein the idle mode measurement interval information indicates a period at which measurement is performed in the idle mode or the inactive mode.

7. The user equipment of claim 6, wherein the controller is configured to perform measurement in the idle mode or the inactive mode until a timer based on the idle mode measurement interval information expires or is stopped.

8. The user equipmentof claim 6, wherein the controller is configured to:
receive a second message comprising system information from the base station; and
in case that a timer based on the idle mode measurement interval information expires or is stopped, identify, based on the system information, whether to continue performing the measurement.

9. A method performed by a base station in a wireless communication system, the method comprising:
transmitting a radio resource control (RRC) message comprising measurement configuration information to a user equipment;
receiving a first message comprising user equipment capability information based on the RRC message from the user equipment; and
transmitting an RRC connection release message comprising idle mode measurement configuration information to the user equipment.

10. The method of claim 9, wherein the idle mode measurement configuration information indicates measurement configuration information used in an idle mode or an inactive mode, and
wherein, in case that the idle mode measurement configuration information comprises idle mode measurement interval information, the idle mode measurement interval information indicates a period at which the user equipment performs measurement in the idle mode or the inactive mode.

11. The method of claim 10, wherein the idle mode measurement interval information is used by the user equipment to perform measurement in the idle mode or the inactive mode until a timer based on the idle mode measurement interval information expires or is stopped.

12. The method of claim 10, comprising transmitting a second message comprising system information to the user equipment,
wherein the system information is used by the user equipment to, in case that a timer based on the idle mode measurement interval information expires or is stopped, identify, based on the system information, whether to continue performing the measurement.

13. A base station in a wireless communication system, the base station comprising:
at least one transceiver; and
a controller coupled with the at least one transceiver,
wherein the controller is configured to:
transmit a radio resource control (RRC) message comprising measurement configuration information to a user equipment;
receive a first message comprising user equipment capability information based on the RRC message from the user equipment; and
transmit an RRC connection release message comprising idle mode measurement configuration information to the user equipment.

14. The base station of claim 13, wherein the idle mode measurement configuration information indicates measurement configuration information used in an idle mode or an inactive mode,
wherein, in case that the idle mode measurement configuration information comprises idle mode measurement interval information, the idle mode measurement interval information indicates a period at which the user equipment performs measurement in the idle mode or the inactive mode, and
wherein the idle mode measurement interval information is used by the user equipment to perform measurement in the idle mode or the inactive mode until a timer based on the idle mode measurement interval information expires or is stopped.

15. The base station of claim 13, wherein the controller is configured to transmit a second message comprising system information to the user equipment, and
wherein the system information is used by the user equipment to, in case that a timer based on the idle mode measurement interval information expires or is stopped, identify, based on the system information, whether to continue performing the measurement.
